# EUROPEAN PATENT APPLICATION

(11) **EP 4 507 205 A1**
(43) Date of publication of application: **12.02.2025**
(21) Application number: 23923790.2
(22) Date of filing: 24.11.2023
(51) Int. Cl.: H04B 5/00

(54) **NEAR-FIELD COMMUNICATION APPARATUS AND ELECTRONIC DEVICE**

(30) Priority: 23.02.2023 CN 202310199086
(71) Applicant: Shenzhen Goodix Technology Co., Ltd., Shenzhen, Guangdong 518045 (CN)
(72) Inventor: LIU, Shiyu, Shenzhen, Guangdong 518045 (CN)
(74) Representative: Kraus & Lederer PartGmbB
(86) International application number: PCT/CN2023/133930
(87) International publication number: WO 2024/174627

(57) **Abstract**

The present disclosure relates to a near field communication apparatus and an electronic device, thereby improving performance of near field communication. The NFC apparatus comprises: a NFC chip comprising a first emission terminal and a second emission terminal, wherein the first emission terminal is configured to output a first emission signal, and the second emission terminal is configured to output a second emission signal; a first impedance matching circuit connected between the first emission terminal and a first antenna and configured to adjust an impedance of the first antenna and the first impedance matching circuit, receive the first emission signal and output a first excitation signal to the first antenna; and a second impedance matching circuit connected between the second emission terminal and a second antenna and configured to adjust an impedance of the second antenna and the second impedance matching circuit, receive the second emission signal, and output a second excitation signal to the second antenna.

## Description

The present disclosure claims priority to the patent application for invention No. 202310199086.4 titled "NEAR FIELD COMMUNICATION APPARATUS AND ELECTRONIC DEVICE" and filed with the China National Intellectual Property Administration on 23 February 2023, the entire content of which is incorporated herein by reference.

### TECHNICAL FIELD

Embodiments of the present disclosure relate to the field of near field communication, and more specifically relate to a near field communication apparatus and an electronic device.

### BACKGROUND

With the development of wireless communication technologies, Near Field Communication (NFC) has become one of necessary functions of a mobile communication apparatus. The NFC is a short-range wireless networking technology that allows contactless point-to-point data transmission between electronic devices. When an electronic device such as a mobile phone is combined with the NFC technology, a user can implement, only using his mobile phone, contactless mobile payment in a daily consumption place such as a bus, a subway, and a movie theater, as well as identity recognition functions such as access control management and clock in/out. Performance of the near field communication directly affects user experience. Therefore, how to improve the performance of the near field communication has become a problem to be urgently solved.

### SUMMARY

Embodiments of the present disclosure provide a near field communication apparatus and an electronic device, thereby improving performance of near field communication.

In a first aspect, a NFC apparatus is provided. The NFC apparatus comprises: a NFC chip comprising a first emission terminal and a second emission terminal, wherein the first emission terminal is configured to output a first emission signal, and the second emission terminal is configured to output a second emission signal; a first impedance matching circuit connected between the first emission terminal and a first antenna and configured to adjust an impedance of the first antenna and the first impedance matching circuit, receive the first emission signal and output a first excitation signal to the first antenna; and a second impedance matching circuit connected between the second emission terminal and a second antenna and configured to adjust an impedance of the second antenna and the second impedance matching circuit, receive the second emission signal, and output a second excitation signal to the second antenna.

In an implementation, the NFC apparatus is applied to an electronic device, and at least one of the first antenna and the second antenna is an antenna that is further multiplexed for non-NFC use in the electronic device.

In an implementation, a phase of the first emission signal and a phase of the second emission signal are configured such that emission field strengths of the first antenna and the second antenna are superimposed to reach a predetermined strength.

In an implementation, the phase of the first emission signal is opposite to the phase of the second emission signal; or the phase of the first emission signal is same as the phase of the second emission signal; or a phase difference between the phase of the first emission signal and the phase of the second emission signal is equal to a preset value.

In an implementation, a phase shift of the first excitation signal with respect to the first emission signal is equal or unequal to a phase shift of the second excitation signal with respect to the second emission signal.

In an implementation, within an operating frequency range of the NFC apparatus, a first intersection point, a second intersection point, and a third intersection point are sequentially formed between a curve of a circular chart corresponding to the impedance of the first antenna and the first impedance matching circuit and/or a curve of a circular chart corresponding to the impedance of the second antenna and the second impedance matching circuit and a real axis of the circular chart with frequency increase, wherein an impedance corresponding to the first intersection point is equal to an impedance corresponding to the third intersection point, and a frequency corresponding to the second intersection point is an operating frequency of the NFC apparatus.

In an implementation, the operating frequency is 13.56 MHz, the operating frequency range is [F1, F2], the F1 is smaller than a frequency corresponding to the first intersection point, and the F2 is larger than a frequency corresponding to the third intersection point.

In an implementation, the first impedance matching circuit is configured to adjust the impedance of the first antenna and the first impedance matching circuit to a first target impedance, the second impedance matching circuit is configured to adjust the impedance of the second antenna and the second impedance matching circuit to a second target impedance, and the first target impedance is equal to the second target impedance.

In an implementation, the first impedance matching circuit comprises a first filter unit and a first matching unit, the second impedance matching circuit comprises a second filter unit and a second matching unit, the first filter unit is connected to the first emission terminal and is configured to filter the first emission signal to obtain a first filtered signal; the first matching unit is connected to the first filter unit, and is configured to adjust the impedance of the first antenna and the first impedance matching circuit, receive the first filtered signal, and output the first excitation signal to the first antenna; the second filter unit is connected to the second emission terminal, and is configured to filter the second emission signal to obtain a second filtered signal; and the second matching unit is connected to the second filter unit, and is configured to adjust the impedance of the second antenna and the second impedance matching circuit, receive the second filtered signal, and output second excitation signal to the second antenna.

In an implementation, the first impedance matching circuit further comprises a first isolation unit connected between the first matching unit and the first antenna and configured to reduce interference between the NFC apparatus and other communication apparatuses multiplexing the first antenna; and the second impedance matching circuit further comprises a second isolation unit connected between the second matching unit and the second antenna and configured to reduce interference between the NFC apparatus and the other communication apparatuses multiplexing the second antenna.

In an implementation, the first isolation unit comprises an inductor, a capacitor, or a combination of an inductor and a capacitor; and/or the second isolation unit comprises an inductor, a capacitor, or a combination of an inductor and a capacitor.

In an implementation, the first impedance matching circuit further comprises a first resistor connected between the first matching unit and the first antenna and configured to attenuate a Q value of the first antenna; and the second impedance matching circuit further comprises a second resistor connected between the second matching unit and the second antenna and configured to attenuate a Q value of the second antenna.

In an implementation, the first filter unit comprises a first filter inductor and a first filter capacitor, one terminal of the first filter inductor is connected to the first emission terminal, the other terminal of the first filter inductor is connected to one terminal of the first filter capacitor, and the other terminal of the first filter capacitor is grounded; and the second filter unit comprises a second filter inductor and a second filter capacitor, one terminal of the second filter inductor is connected to the second emission terminal, the other terminal of the second filter inductor is connected to one terminal of the second filter capacitor, and the other terminal of the second filter capacitor is grounded.

In an implementation, an inductance value of the first filter inductor is equal to an inductance value of the second filter inductor.

In an implementation, the first matching unit comprises a first capacitor and a second capacitor, one terminal of the first capacitor is connected to the first filter unit, the other terminal of the first capacitor is connected to one terminal of the second capacitor, and the other terminal of the second capacitor is grounded; and the second matching unit comprises a third capacitor and a fourth capacitor, one terminal of the third capacitor is connected to the second filter unit, the other terminal of the third capacitor is connected to one terminal of the fourth capacitor, and the other terminal of the fourth capacitor is grounded.

In an implementation, the NFC chip further comprises a first receiving terminal and a second receiving terminal, the NFC apparatus further comprises a first peripheral receiving circuit and a second peripheral receiving circuit, the first peripheral receiving circuit is connected between the first receiving terminal and the first matching unit, the first receiving terminal receives a signal from the first antenna through the first peripheral receiving circuit; the second peripheral receiving circuit is connected between the second receiving terminal and the second matching unit, and the second receiving terminal receives a signal from the second antenna through the second peripheral receiving circuit.

In a second aspect, an electronic device is provided, comprising the NFC apparatus in any one implementation of the first aspect or the second aspect.

Based on the above technical solutions, the NFC apparatus uses two antenna segments, equivalent to increasing the effective length and area of the antennas, thereby increasing emission field strength thereof, and improving the near field communication performance of the NFC apparatus. Both antenna segments are single-terminal antennas. One of the impedance matching circuits is arranged between an emission terminal of the NFC chip and one of the antenna segments, and the other impedance matching circuit is arranged between the other emission terminal of the NFC chip and the other antenna segment, thus driving the two antenna segments respectively by single terminal driving, implementing NFC functions without additionally providing a balun device in each of the impedance matching circuits, and reducing the problems of space occupation, losses, and costs caused by the balun device.

### BRIEF DESCRIPTION OF DRAWINGS

FIG. 1 is a schematic diagram of a NFC apparatus in an embodiment of the present disclosure.
FIG. 2 is a schematic diagram of a possible specific implementation of the NFC apparatus shown in FIG. 1.
FIG. 3 is a schematic diagram of a curve of an impedance of an antenna and an impedance matching circuit thereof on a circular chart in an embodiment of the present disclosure.
FIG. 4 is a schematic diagram of a first antenna and a second antenna in an electronic device in an embodiment of the present disclosure.
FIG. 5 is a schematic diagram of a possible specific implementation of the NFC apparatus shown in FIG. 2.

### DETAILED DESCRIPTION

Technical solutions of the present disclosure will be described below with reference to the drawings.

At present, an electronic device, such as a mobile phone, is in increasingly great shortage of space resources. In order to achieve higher space utilization, antennas in the electronic device are multiplexed, for example, a cellular antenna at a frame of the mobile phone or an antenna of a Global Position System (GPS) serves as a NFC antenna, which has become a trend. However, antennas in the electronic device are increasingly shorter, and when used as NFC antennas, they generally fail to satisfy requirements of near field communication for magnitude and distribution of a magnetic field. Therefore, in embodiments of the present disclosure, two different antenna segments are used as the NFC antennas, and the two antenna segments are connected through a system ground, equivalent to increasing the effective length and area of the antennas, thereby increasing emission field strength thereof, and improving performance of the near field communication.

However, since lengths of the two antenna segments are generally unequal, and electromagnetic environments around the two antenna segments are also different, parameters of the two antenna segments are greatly different, thus forming a pair of asymmetric antennas. When matching and debugging the two antenna segments, a balun device, namely Balanced to Unbalanced (Balun), may be used to convert a differential driving mode into a single terminal driving mode to achieve conversion from asymmetry to symmetry. However, due to large volume and high costs, the balun device not only increases the costs, but also occupies internal space of the mobile phone, which is not conducive to improving space utilization, and can bring additional losses.

Therefore, in an embodiment of the present disclosure, one of the impedance matching circuits is arranged between an emission terminal of the NFC chip and one of the antenna segments, and the other impedance matching circuit is arranged between the other emission terminal of the NFC chip and the other antenna segment, thus driving the two antenna segments respectively by single terminal driving, implementing NFC functions without additionally providing a balun device in each of the impedance matching circuits, and reducing the problems of space occupation, losses, and costs caused by the balun device.

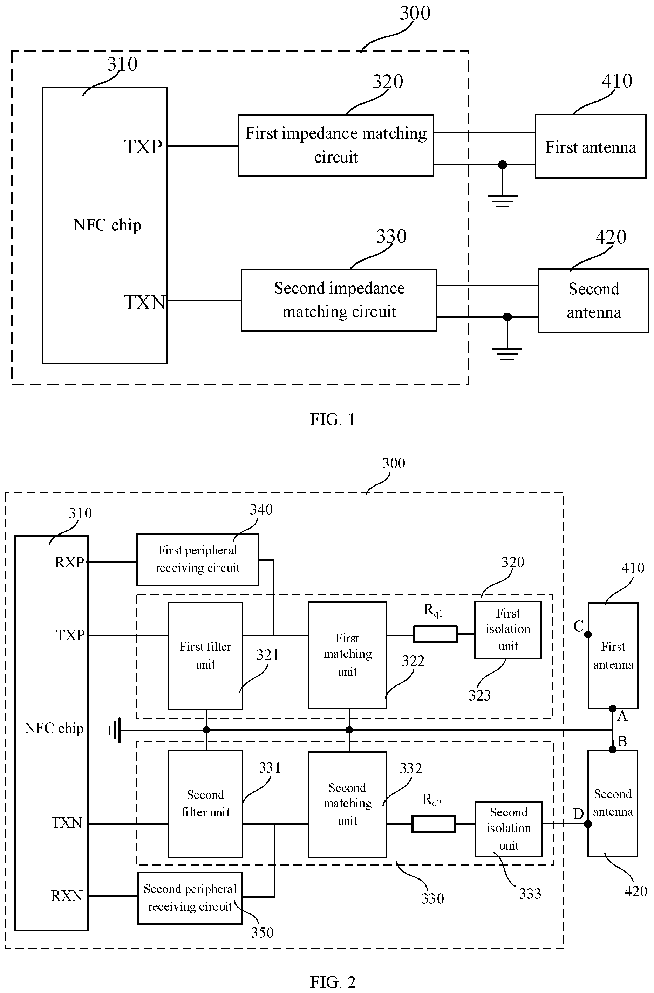

FIG. 1 is a schematic diagram of a NFC apparatus 300 in an embodiment of the present disclosure. As shown in FIG. 1, the NFC apparatus 300 comprises a NFC chip, a first impedance matching circuit 320, and a second impedance matching circuit 330. The NFC chip comprises a first emission terminal and a second emission terminal. The first emission terminal is configured to output a first emission signal, and the second emission terminal is configured to output a second emission signal. The first emission signal and the second emission signal may be, for example, a square wave signal or a sine wave signal, etc. As an example, in an embodiment of the present disclosure, the first emission terminal is TXP, and the second emission terminal is TXN.

The first impedance matching circuit 320 is connected between the first emission terminal TXP and the first antenna 410. The first impedance matching circuit 320 is configured to adjust an impedance of the first antenna 410 and the first impedance matching circuit 320; the second impedance matching circuit 330 is connected between the second emission terminal TXN and a second antenna 420, and the second impedance matching circuit 330 is configured to adjust an impedance of the second antenna 420 and the second impedance matching circuit 330.

The NFC apparatus 300 uses two antenna segments, equivalent to increasing the effective length and area of the antennas, thereby increasing emission field strength thereof, and improving the near field communication performance of the NFC apparatus. Both antenna segments are single-terminal antennas. One of the impedance matching circuits is arranged between one of the emission terminals of the NFC chip and one of the antenna segments, and the other impedance matching circuit is arranged between the other emission terminal of the NFC chip and the other antenna segment, thus driving the two antenna segments respectively by single terminal driving, implementing NFC functions without additionally providing a balun device in each of the impedance matching circuits, and reducing the problems of space occupation, losses, and costs caused by the balun device.

In an implementation, as shown in FIG. 2, the first impedance matching circuit 320 comprises a first filter unit 321 and a first matching unit 322. The first filter unit 321 is connected to the first emission terminal TXP, and is configured to filter the first emission signal outputted from the first emission terminal TXP to obtain a first filtered signal. The first filtered signal is, for example, a fundamental signal obtained after eliminating a harmonic signal in the filtered first emission signal. The first matching unit 322 is connected to the first filter unit 321, and is configured to adjust the impedance of the first antenna 410 and the first impedance matching circuit 320 and transmit the first filtered signal to the first antenna 410. Specifically, the first matching unit 322 receives the first filtered signal, and outputs a first excitation signal to the first antenna 410. The first excitation signal is used to drive the first antenna 410 to generate a magnetic field. With the first matching unit 322, a total impedance of the first antenna 410 and the first impedance matching circuit 320 can be adjusted to a first target impedance to avoid energy loss caused when signals are transmitted in the first impedance matching circuit 320 and the first antenna 410, to ensure that the first antenna 410 can emit the magnetic field to an utmost extent. The first target impedance may be, for example, an impedance having only a real part and an imaginary part of 0.

The second impedance matching circuit 330 comprises a second filter unit 331 and a second matching unit 332. The second filter unit 331 is connected to the second emission terminal TXN and is configured to filter the second emission signal outputted from the second emission terminal TXN to obtain a second filtered signal. The second filtered signal is, for example, a fundamental signal obtained after eliminating a harmonic signal in the filtered second emission signal. The second matching unit 332 is connected to the second filter unit 331, and is configured to adjust the impedance of the second antenna 420 and the second impedance matching circuit 330 and transmit the second filtered signal to the second antenna 420. Specifically, the second matching unit 332 receives the second filtered signal and outputs a second excitation signal to the second antenna 420. The second excitation signal is used to drive the second antenna 420 to generate a magnetic field. With the second matching unit 332, a total impedance of the second antenna 430 and the second impedance matching circuit 330 can be adjusted to a second target impedance to avoid energy loss caused when signals are transmitted in the second impedance matching circuit 330 and the second antenna 420, to ensure that the second antenna 420 can emit the magnetic field to an utmost extent. The second target impedance may be, for example, an impedance having only a real part and an imaginary part of 0.

With the first impedance matching circuit 320, the impedance of the first antenna 410 and the first impedance matching circuit 320 is adjusted to the first target impedance, and with the second impedance matching circuit 330, the impedance of the second antenna 420 and the second impedance matching circuit 330 is adjusted to the second target impedance. Preferably, the first target impedance is equal to the second target impedance. In this way, the first emission terminal TXP and the second emission terminal TXN of the NFC chip 310 output equal useful powers, which is conductive to implementation of the NFC chip 310. In an embodiment of the present disclosure, the target impedance refers to a target value to which the impedance of the antenna and the impedance matching circuit thereof is expected to be adjusted, and is ideally a pure impedance, that is, only having a real part and an imaginary part of 0. In a practical application, the target impedance may also be a complex impedance with a smaller imaginary part, for example, smaller than a set threshold.

In an implementation, within an operating frequency range of the NFC apparatus 300, a first intersection point, a second intersection point, and a third intersection point are sequentially formed between a curve of a circular chart corresponding to the impedance of the first antenna 410 and the first impedance matching circuit 320 and a real axis of the circular chart with frequency increase, an impedance corresponding to the first intersection point is equal to an impedance corresponding to the third intersection point, and a frequency corresponding to the second intersection point is an operating frequency of the NFC apparatus 300; and/or a first intersection point, a second intersection point, and a third intersection point are sequentially formed between a curve of a circular chart corresponding to the impedance of the second antenna 420 and the second impedance matching circuit 330 and a real axis of the circular chart with frequency increase, an impedance corresponding to the first intersection point is equal to an impedance and corresponding to the third intersection point, and a frequency corresponding to the second intersection point is the operating frequency of the NFC apparatus 300.

The operating frequency of the NFC apparatus 300 is, for example, 13.56 MHz. The operating frequency range of the NFC apparatus 300 is, for example, [F1, F2]. The F1 is smaller than a frequency corresponding to the first intersection point, and the F2 is larger than a frequency corresponding to the third intersection point. It is understandable that the first intersection point is also referred to as a first resonant point, the second intersection point is also referred to as a second resonant point, and the third intersection point is also referred to as a third resonant point.

When impedances of the first resonant point and the third resonant point near the operating frequency of the NFC apparatus 300 are equal, and a frequency corresponding to the second resonant point is the operating frequency, an impedance curve may be referred to as a symmetrical form, thus ensuring generation of a constant phase shift between the first excitation signal of the first antenna 410 and the first emission signal outputted from the first emission terminal TXP, and between the second excitation signal of the second antenna 420 and the second emission signal outputted from the second emission terminal TXN.

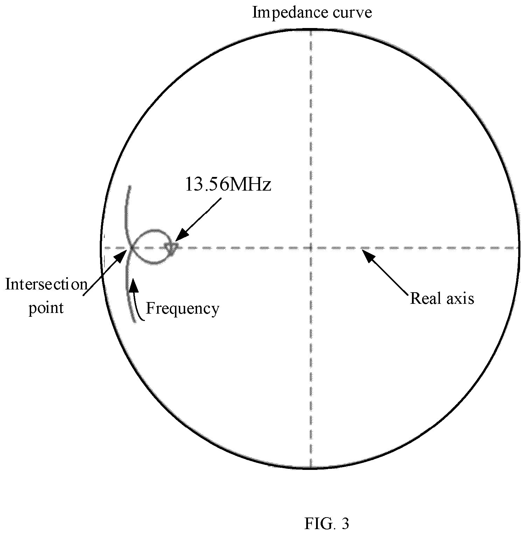

The impedance curve of the first antenna 410 and the first impedance matching circuit 320 is used as an example for illustration, and the operating frequency of the NFC apparatus is 13.56 MHz. For example, in a Smith chart of the impedance of the first antenna 410 and the first impedance matching circuit 320 as shown in FIG. 3, a curve inside the circle is the impedance curve of the first antenna 410 and the first impedance matching circuit 320, and a position marked with a triangle is a position of an impedance corresponding to 13.56 MHz in the Smith chart. In FIG. 3, the position of the impedance corresponding to 13.56 MHz is located on a real axis, i.e., a horizontal axis in FIG. 3. Therefore, the impedance corresponding to 13.56 MHz has only a real part and an imaginary part of 0, which is equivalent to pure resistance, 13.56 MHz is a second resonant point when a nearby frequency thereof changes from small to large, and an impedance of a nearby first resonant point thereof is equal to an impedance of a nearby third resonant point thereof. Here, the first resonant point, the second resonant point, and the third resonant point mean that along a frequency change direction shown in FIG. 3, a position where the impedance curve intersects a real axis of the circular chart for a first time is a position of the first resonant point, a position where the impedance curve intersects the real axis of the circular chart for a second time is a position of the second resonant point, a position where the impedance curve intersects the real axis of the circular chart for a third time is a position of the third resonant point, a frequency of the second resonant point is equal to 13.56 MHz, a frequency of the first resonant point is smaller than 13.56 MHz, and a frequency of the third resonant point is larger than 13.56 MHz. In a practical application, the position of the impedance corresponding to 13.56 MHz may not be pure resistance, that is, the frequency corresponding to the second resonant point may not be 13.56 MHz, but within an acceptable frequency range near 13.56 MHz, an impedance of the first resonant point may not be exactly equal to an impedance of the third resonant point, the first resonant point may be located to the left of the third resonant point, and the first resonant point may be located to the right of the third resonant point. However, as long as an impedance curve formed by the nearby first resonant point, second resonant point, and third resonant point including 13.56 MHz is approximately a symmetrical form, the intersection points of the impedance curve are allowed to deviate from the real axis of the circular chart to a certain extent, for example, located above or below the real axis of the circular chart.

The first antenna 410 and the second antenna 420 are two different antenna segments, and both the first antenna 410 and the second antenna 420 are single-terminal antennas. For example, both the first antenna 410 and the second antenna 420 are antennas formed by a flexible printed circuit (FPC) and ferrite; or, one of the first antenna 410 and the second antenna 420 is an antenna formed by FPC and ferrite, and the other one is an antenna that is further multiplexed for non-NFC use in an electronic device; or, both the first antenna 410 and the second antenna 420 are antennas that are further multiplexed for non-NFC use in an electronic device.

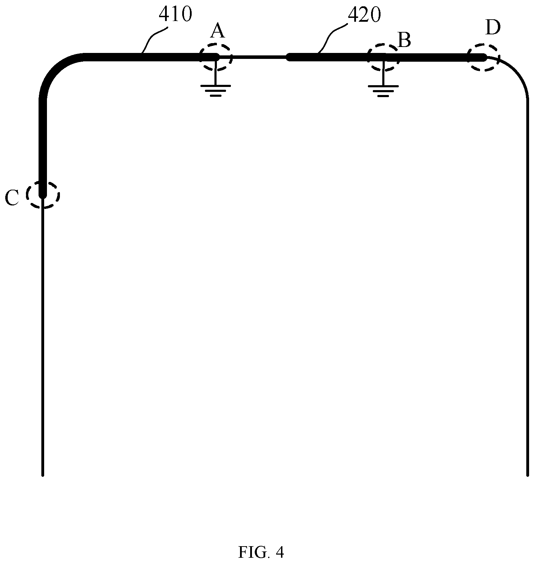

When both the first antenna 410 and the second antenna 420 are antennas that are further multiplexed for non-NFC use in an electronic device, such as a cellular antenna or a GPS antenna at a frame of the electronic device. The NFC apparatus 300 and other communication apparatuses, such as a cellular communication apparatus or a GPS communication apparatus, in the electronic device effectively improve the space utilization within the electronic device by multiplexing the antennas in the electronic device. Further, the NFC apparatus 300 uses two antenna segments in the electronic device as the NFC antenna, equivalent to increasing the effective length and area of the NFC antenna, thereby increasing emission field strength thereof, and improving the near field communication performance of the NFC apparatus 300. For example, as shown in FIG. 4, the first antenna 410 and the second antenna 420 are connected through the system ground. The first antenna 410 is connected to the system ground through a grounding point A, and the second antenna 420 is connected to the system ground through a grounding point B, thus forming an electrical connection between the first antenna 410 and the second antenna 420. The first antenna 410 is connected to one signal terminal of the NFC apparatus 300 through a feeding point C, for example, a connection terminal between the first impedance matching circuit 320 and the first antenna 410, and the second antenna 420 is connected to the other signal terminal of the NFC apparatus 300 through a feeding point D, for example, a connection terminal between the second impedance matching circuit 330 and the second antenna 420. The first antenna 410 and the second antenna 420 may be connected in series or in parallel. For example, when the first antenna 410 and the second antenna 420 are connected in series, and when a direction of a current on the first antenna 410 is opposite to a direction of a current on the second antenna 420, for example, the current on the first antenna 410 flows from the feeding point C to the grounding point A, and the current on the second antenna 420 flows from the grounding point B to the feeding point D, the current on the first antenna 410 and the current on the second antenna 420 can form a circuit, thereby obtaining better superimposition of field strength vectors, so that a sum of the field strength vectors emitted outwardly from the first antenna 410 and the second antenna 420 reaches a better state.

Lengths, shapes, and surrounding electromagnetic environments of the first antenna 410 and the second antenna 420 may all be different. Therefore, antenna parameters of the first antenna 410 and the second antenna 420 are different, and the first antenna 410 and the second antenna 420 form a pair of asymmetric antennas.

Based on this, voltage driving phases of the first emission terminal TXP and the second emission terminal TXN can be reasonably set. In an implementation, a phase of the first emission signal and a phase of the second emission signal outputted from the first emission terminal TXP are set, so that emission field strengths of the first antenna 410 and the second antenna 420 are superimposed to reach a predetermined strength, such as reaching a maximum strength.

For example, when a phase of the first excitation signal of the first antenna 410 is opposite to a phase of the second excitation signal of the second antenna 420, the emission field strengths of the first antenna 410 and the second antenna 420 are superimposed, and then strengthened, for example, strengthened to a maximum value. The phase of the first emission signal outputted from the first emission terminal TXP may be set to be opposite to the phase of the second emission signal outputted from the second emission terminal TXN.

For another example, when a phase of the first excitation signal of the first antenna 410 is opposite to a phase of the second excitation signal of the second antenna 420, the emission field strengths of the first antenna 410 and the second antenna 420 are superimposed, and then strengthened, for example, strengthened to a maximum value. The phase of the first emission signal outputted from the first emission terminal TXP may be set to be opposite to the phase of the second emission signal outputted from the second emission terminal TXN.

For another example, when there is a phase difference between the phase of the first excitation signal of the first antenna 410 and the phase of the second excitation signal of the second antenna 420, the emission field strengths of the first antenna 410 and the second antenna 420 are superimposed, and then strengthened, for example, strengthened to a maximum value. The phase difference may also be set between the phase of the first emission signal outputted from the first emission terminal TXP and the phase of the second emission signal outputted from the second emission terminal TXN.

What relationship between the phase of the first excitation signal and the phase of the second excitation signal enables a magnetic field of the first antenna and a magnetic field of the second antenna to be mutually superimposed and then strengthened is associated with respective characteristics of the first antenna and the second antenna.

In a practical application, when impedance matching is performed on the first antenna 410 and the second antenna 420 respectively, due to influence of consistency of matching devices, various parasitisms, etc., an impedance curve of the first antenna 410 and the first impedance matching circuit 320 may not be an ideal symmetrical form, and an impedance curve of the second antenna 420 and the second impedance matching circuit 330 may not be an ideal symmetrical form, either. In this case, a phase shift produced by the first excitation signal of the first antenna 410 with respect to the first emission signal outputted from the first emission terminal TXP and a phase shift produced by the second excitation signal of the second antenna 420 with respect to the second emission signal outputted from the second emission terminal TXN may not be a constant phase. The phase shift of the first excitation signal with respect to the first emission signal may be equal to, or may be unequal to, a phase shift of the second excitation signal with respect to the second emission signal.

For example, when the phase of the first excitation signal is opposite to the phase of the second excitation signal, the magnetic field of the first antenna 410 and the magnetic field of the second antenna 420 are mutually superimposed, and then strengthened. Then, when the phase shift of the first excitation signal with respect to the first emission signal is equal to the phase shift of the second excitation signal with respect to the second emission signal, the phase of the first emission signal may be set to be opposite to the phase of the second emission signal; and when the phase shift of the first excitation signal with respect to the first emission signal is unequal to the phase shift of the second excitation signal with respect to the second emission signal, it is necessary to adjust a phase difference between the phase of the first emission signal and the phase of the second emission signal, such that the phase of the first excitation signal formed by the first emission signal after passing through the first impedance matching circuit 320 is opposite to the phase of the second excitation signal formed by the second emission signal after passing through the second impedance matching circuit 330. In this case, the phase of the first emission signal and the phase of the second emission signal are not opposite, but are equal to a preset value.

The preset value may be obtained by testing. For example, after the phase of the first emission signal outputted from the first emission terminal TXP is set, the phase of the second emission signal outputted from the second emission terminal TXN is adjusted based on a certain step size, and the magnetic field is detected. When the phase of the second emission signal is adjusted to a phase value, the magnetic field reaches a maximum strength, and the phase of the second emission signal is set as the phase value.

Hence, the phase difference between the first emission signal outputted from the first emission terminal TXP and the second emission signal outputted from the second emission terminal TXN can be adjusted, for example, the phase difference between the phase of the first emission signal and the phase of the second emission signal is adjusted to be equal to the preset value, so that a phase relationship between the first excitation signal of the first antenna 410 and the second excitation signal of the second antenna 420 enables to strengthen the magnetic field emitted from the NFC antenna and acquire a greater receiving signal strength.

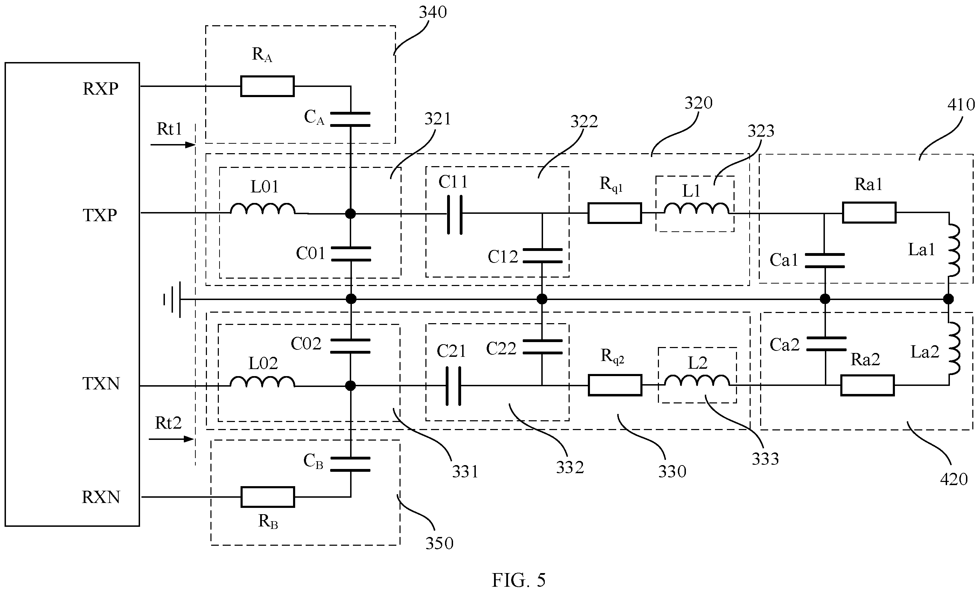

The first filter unit 321 and the first matching unit 322 in the first impedance matching circuit 320, as well as the second filter unit 331 and the second matching unit 332 in the second impedance matching circuit 330, may have various implementation forms. FIG. 5 shows a schematic structural diagram of a possible specific implementation of the first impedance matching circuit 320 and the second impedance matching circuit 330.

As shown in FIG. 5, the first filter unit 321 is, for example, an electro magnetic compatibility (EMC) filter, which comprises a first filter inductor L01 and a first filter capacitor C01, one terminal of the first filter inductor L01 is connected to the first emission terminal TXP, the other terminal of the first filter inductor L01 is connected to one terminal of the first filter capacitor C01, and the other terminal of the first filter capacitor C01 is grounded. Optionally, the first filter unit 321 may comprise, in addition to the first filter inductor L01 and the first filter capacitor C01, a resistor connected in series with the first filter inductor L01.

The second filter unit 331 is, for example, an EMC filter, which comprises a second filter inductor L02 and a second filter capacitor C02, one terminal of the second filter inductor L02 is connected to the second emission terminal TXN, the other terminal of the second filter inductor L02 is connected to one terminal of the second filter capacitor C02, and the other terminal of the second filter capacitor C02 is grounded. Optionally, the second filter unit 331 may comprise, in addition to the second filter inductor L02 and the second filter capacitor C02, a resistor connected in series with the second filter inductor L02.

The first filter unit 321, the second filter unit 331, the first matching unit 322, and the second matching unit 332 are each composed of one or more devices such as inductors, resistors, and capacitors. The number of each kind of devices may be one or more. For example, the first matching unit 322 comprises two capacitors, and the second matching unit 332 comprises two capacitors, wherein one of the capacitors may be obtained by connecting a plurality of capacitors in series or in parallel.

As an example, as shown in FIG. 5, the first matching unit 322 comprises a first capacitor C11 and a second capacitor C12, one terminal of the first capacitor C11 is connected to the first filter unit 321, the other terminal of the first capacitor C11 is connected to one terminal of the second capacitor C12, and the other terminal of the second capacitor C12 is grounded. Capacitance values of the first capacitor C11 and the second capacitor C12 are adjusted, to change a total impedance of the first antenna 410 and the first impedance matching circuit 320 connected to the first antenna, so that the total impedance Rt1 of the first antenna 410 and the first impedance matching circuit 320 is equal to the first target impedance. When the total impedance of the first antenna 410 and the first impedance matching circuit 320 is equal to the first target impedance, the first antenna 410 can emit signal energy outputted from the first emission terminal TXP of the NFC chip 310 to the utmost extent. Of course, alternatively, at least one of the first capacitor C11, the second capacitor C12, the first filter inductor L01, and the first filter capacitor C01 may be adjusted, so that the total impedance Rt1 of the first antenna 410 and the first impedance matching circuit 320 is equal to the first target impedance.

The second matching unit 332 comprises a third capacitor C21 and a fourth capacitor C22, one terminal of the third capacitor C21 is connected to the second filter unit 331, the other terminal of the third capacitor C21 is connected to one terminal of the fourth capacitor C22, and the other terminal of the fourth capacitor C22 is grounded. Capacitance values of the third capacitor C21 and the fourth capacitor C22 are adjusted, to change the total impedance of the second antenna 420 and the second impedance matching circuit 330 connected to the second antenna, so that the total impedance Rt2 of the second antenna 420 and the second impedance matching circuit 330 is equal to the second target impedance. When the total impedance of the second antenna 420 and the second impedance matching circuit 330 is equal to the second target impedance, the second antenna 420 can emit signal energy outputted from the second emission terminal TXN of the NFC chip 310 to the utmost extent. Of course, alternatively, at least one of the third capacitor C21, the fourth capacitor C22, the second filter inductor L02, and the second filter capacitor C02 may be adjusted, so that the total impedance Rt2 of the second antenna 420 and the second impedance matching circuit 330 is equal to the second target impedance.

In an implementation, as shown in FIG. 2, the first impedance matching unit 320 further comprises a first isolation unit 323 connected between the first matching unit 322 and the first antenna 410, the first isolation unit 323 being configured to reduce interference between the NFC apparatus 300 and other communication apparatuses multiplexing the first antenna 410; and/or the second impedance matching circuit 330 further comprises a second isolation unit 333 connected between the second matching unit 332 and the second antenna 420, the second isolation unit 333 being configured to reduce interference between the NFC apparatus 300 and the other communication apparatuses multiplexing the second antenna 420.

For example, the first isolation unit 323 may comprise an inductor, a capacitor, or a combination of an inductor and a capacitor; and/or the second isolation unit 333 may comprise an inductor, a capacitor, or a combination of an inductor and a capacitor. When types and connection relationships of elements included in the first isolation unit 323 are different, the first isolation unit 323 may be grounded, or may be non-grounded. Likewise, when types and connection relationships of elements included in the second isolation unit 333 are different, the second isolation unit 333 may be grounded, or may be non-grounded. As an example, as shown in FIG. 5, the first isolation unit 323 comprises a first inductor L1, and the second isolation unit 333 comprises a second inductor L2.

The first isolation inductor L1 and the second isolation inductor L2 have energy storage and conversion functions, thereby reducing the influence on signals of the other communication apparatuses, such as a cellular communication apparatus or a GPS communication apparatus caused by remaining ultraharmonics that are not filtered by the first filter unit 321 and the second filter unit 331, while reducing the influence on signals of the NFC apparatus 300 caused by high-frequency signals of the other communication apparatuses. Further, wiring between the first matching unit 322 and the first antenna 410 and between the second matching unit 332 and the second antenna 420 has a certain length, and lengths of antennas of the other communication apparatuses are generally set as about 1/4 of wavelengths corresponding to operating frequencies thereof to acquire a better emission efficiency. Therefore, the other communication apparatuses have certain requirements for the antenna length. When the antennas are used for communication, this wiring is equivalent to increasing the antenna length, that is to say, when the NFC apparatus 300 and the other communication apparatuses multiplex the first antenna 410 and the second antenna 420, the antenna lengths of the other communication apparatuses can be affected, thereby affecting the communication performance of the other communication apparatuses. By additionally providing the first isolation inductor L1 and the second isolation inductor L2, due to high impedances of the first isolation inductor L1 and the second isolation inductor L2, the wiring between the matching unit 122 and the antenna 200 is equivalent to being disconnected, and therefore cannot affect the antenna lengths of the other communication apparatuses.

In an implementation, as shown in FIG. 2, the first impedance matching circuit 320 further comprises a first resistor Rq1 connected between the first matching unit 322 and the first antenna 410, the first resistor Rq1 being configured to attenuate a Q value of the first antenna 410; and/or the second impedance matching circuit 330 further comprises a second resistor Rq2 connected between the second matching unit 332 and the second antenna 420, the second resistor Rq2 being configured to attenuate a Q value of the second antenna 420.

For example, as shown in FIG. 5, the first resistor Rq1 is connected in series with the first isolation inductor L1. one terminal of the first resistor Rq1 is connected to the first capacitor C11 and the second capacitor C12 in the first matching unit 322, the other terminal of the first resistor Rq1 is connected to one terminal of the first isolation inductor L1, the other terminal of the first isolation inductor L1 is connected to one terminal of the first antenna 410, and the other terminal of the first antenna 410 is grounded. The second resistor Rq2 is connected in series with the second isolation inductor L2, one terminal of the second resistor Rq2 is connected to the third capacitor C21 and the fourth capacitor C22 in the second matching unit 332, the other terminal of the second resistor Rq2 is connected to one terminal of the second isolation inductor L2, the other terminal of the second isolation inductor L2 is connected to one terminal of the second antenna 420, and the other terminal of the second antenna 420 is grounded.

It is understandable that in some cases, the first impedance matching circuit 320 may not comprise the first resistor Rq1 and/or the first isolation unit 323; and the second impedance matching circuit 330 may not comprise the second resistor Rq2 and/or the second isolation unit 333.

The first impedance matching circuit 320 and the second impedance matching circuit 330 may have a same structure, or may have different structures, but either can receive the a single-ended signal outputted from a corresponding emission terminal on the NFC chip 310, and drive a corresponding single-terminal antenna respectively by single terminal driving. Preferably, the above description is provided when the first impedance matching circuit 320 and the second impedance matching circuit 330 have the same structure. It is understandable that the first impedance matching circuit 320 and the second impedance matching circuit 330 have the same structure, which means that types and numbers of, and a connection relationship between, elements included in the first impedance matching circuit 320 and the second impedance matching circuit 330 are the same, but values of corresponding elements in the first impedance matching circuit 320 and the second impedance matching circuit 330 may be different.

For example, as shown in FIG. 5, the first impedance matching circuit 320 and the second impedance matching circuit 330 have the same structure. The first filter inductor L01, the first filter capacitor C01, the first capacitor C11, the second capacitor C12, the first resistor Rq1, and the first isolation inductor L1 in the first impedance matching circuit 320 correspond to the second filter inductor L02, the second filter capacitor C02, the third capacitor C21, the fourth capacitor C22, the second resistor Rq2, and the second isolation inductor L2 in the second impedance matching circuit 330 respectively. Equivalent circuit parameters, such as capacitance Ca1, resistance Ra1, and inductance La1, in an equivalent circuit of the first antenna 410 may be different from equivalent circuit parameters, such as capacitance Ca2, resistance Ra2, and inductance La2, in the second antenna 420. Therefore, the impedance of the first antenna 410 and the first impedance matching circuit 320 thereof and the impedance of the second antenna 420 and the second impedance matching circuit 330 thereof need to be adjusted respectively. In an embodiment of the present disclosure, an inductance value of the first filter inductor L01 may be equal to, or may be unequal to, an inductance value of the second filter inductor L02, and a capacitance value of the first filter capacitor C01 may be equal to, or may be unequal to, a capacitance value of the second filter capacitor C02, a capacitance value of the first capacitor C11 may be equal to, or may be unequal to, a capacitance value of the third capacitor C21, a capacitance value of the second capacitor C12 may be equal to, or may be unequal to, a capacitance value of the fourth capacitor C22, a resistance value of the first resistor Rq1 may be equal to, or may be unequal to, a resistance value of the second resistor Rq2, and an inductance value of the first isolation inductor L1 may be equal to, or may be unequal to, an inductance value of the second isolation inductor L2. That is to say, in the above-mentioned plurality of pairs of elements, values of two elements in at least some of the pairs are unequal, and the first impedance matching circuit 320 and the second impedance matching circuit 330 are asymmetric, which is different from conventional differential matching.

Preferably, the inductance value of the first filter inductor L01 is equal to the inductance value of the second filter inductor L02. In this way, an Equivalent Series Resistance (ESR) of the first filter inductor L01 is also equal to an ESR of the second filter inductor L02, thereby ensuring that a same carrier wave amplitude can be obtained at a non-grounded terminal of the first filter capacitor C01 and a non-grounded terminal of the second filter capacitor C02. In this case, the capacitance value of the first filter capacitor C01 may be unequal to the capacitance value of the second filter capacitor C02, the capacitance value of the first capacitor C11 may be unequal to the capacitance value of the third capacitor C21, the capacitance value of the second capacitor C12 may be unequal to the capacitance value of the fourth capacitor C22, the resistance value of the first resistor Rq1 may be unequal to the resistance value of the second resistor Rq2, and the inductance value of the first isolation inductor L1 may be unequal to the inductance value of the second isolation inductor L2.

In an implementation, the NFC chip further comprises a first receiving terminal and a second receiving terminal. As an example, in an embodiment of the present disclosure, the first receiving terminal is RXP and the second receiving terminal is RXN. The NFC apparatus 300 further comprises a first peripheral receiving circuit 340 and a second peripheral receiving circuit 350. The first peripheral receiving circuit 340 is connected between the first receiving terminal RXP and the first matching unit 322, and the first receiving terminal RXP receives a signal from the first antenna 410 through the first peripheral receiving circuit 340. The second peripheral receiving circuit 350 is connected between the second receiving terminal RXN and the second matching unit 332, and the second receiving terminal RXN receives a signal from the second antenna 420 through the second peripheral receiving circuit 350.

For example, as shown in FIG. 5, a resistor R_{A} and a capacitor C_{A} connected to the first receiving terminal RXP of the NFC chip 310 may form the first peripheral receiving circuit 340, the first receiving terminal RXP receives the signal from the first antenna 410 through the first peripheral receiving circuit 340; a resistor R_{B} and a capacitor C_{B} connected to the second receiving terminal RXN of the NFC chip 310 may form the corresponding second peripheral receiving circuit 350, and the second receiving terminal RXN receives the signal from the second antenna 420 through the second peripheral receiving circuit 350.

Hence, in order to implement cooperative work of the first antenna 410 and the second antenna 420, and improve the signal emission power and signal reception strength, the first impedance matching circuit 410 connected between the first emission terminal TXP of the NFC chip 310 and the first antenna 410 and the second impedance matching circuit 420 connected between the second emission terminal TXN and the second antenna 420 are debugged respectively to debug and match the first antenna 410 and the second antenna 420 without using a balun device, thereby reducing the problems of space occupation, losses, and costs caused by the balun device.

An embodiment of the present disclosure further provides an electronic device, which may comprise the NFC apparatus 300 in any one of the foregoing embodiments.

As an example and non-restrictively, the electronic device in an embodiment of the present disclosure may be a portable or mobile computing device, such as a terminal device, a mobile phone, a tablet computer, a notebook computer, a desktop computer, a game device, a vehicle electronic device, or a wearable smart device, or may be other electronic devices, such as an electronic database, an automobile, or an automated teller machine (ATM) of a bank. The wearable smart device includes a device that has complete functions and a large size, and can realize complete or partial functions without relying on a smart phone, such as a smart watch or smart glasses, and includes a device that only focuses on a certain type of application functions and needs to be used in cooperation with other devices such as a smart phone, for example, various smart bracelets and smart jewelries for monitoring physical signs.

It should be noted that the embodiments in the present disclosure and/or the technical features in the embodiments may be combined with each other in any way in the case of no conflict, and the combined technical solutions should also be encompassed within the scope of protection of the present disclosure.

The system, apparatus, and method disclosed in the embodiments of the present disclosure may be implemented by other approaches. For example, some features of the method embodiments described above may be neglected, or may not be performed. The above-described apparatus embodiments are merely illustrative, the division of the units is only a logical function division, other division manners may be available during actual implementations, and a plurality of units or components may be combined or may be integrated into another system. In addition, the coupling between the units or the coupling between the components may be direct coupling or indirect coupling, and the above-mentioned coupling includes electrical connection, mechanical connection, or other forms of connection.

Those skilled in the art can clearly understand that, for convenience and simplicity of description, corresponding processes and technical effects in the above method embodiments may be referred to for specific working process of the above-described apparatus and device and technical effects thereof, which will not be repeated here.

It should be understood that the specific examples in the embodiments of the present disclosure are provided only to help those skilled in the art to better understand the embodiments of the present disclosure, rather than limiting the scope of the embodiments of the present disclosure. Those skilled in the art may make various improvements and modifications on the basis of the above embodiments, and these improvements or modifications all fall within the scope of protection of the present disclosure.

While the above description merely provides specific embodiments of the present disclosure, the scope of protection of the present disclosure is not limited to the specific embodiments. Any person skilled in the art can easily conceive of alterations or replacements within the technical scope disclosed in the present disclosure. All these alterations or replacements should be encompassed within the scope of protection of the present disclosure. Therefore, the scope of protection of the present disclosure should be determined by the scope of protection of the appended claims.

## Claims

1. A near field communication (NFC) apparatus, comprising:
a NFC chip comprising a first emission terminal and a second emission terminal, wherein the first emission terminal is configured to output a first emission signal, and the second emission terminal is configured to output a second emission signal;
a first impedance matching circuit connected between the first emission terminal and a first antenna and configured to adjust an impedance of the first antenna and the first impedance matching circuit, receive the first emission signal and output a first excitation signal to the first antenna; and
a second impedance matching circuit connected between the second emission terminal and a second antenna and configured to adjust an impedance of the second antenna and the second impedance matching circuit, receive the second emission signal, and output a second excitation signal to the second antenna.

2. The NFC apparatus according to claim 1, wherein the NFC apparatus is applied to an electronic device, and at least one of the first antenna and the second antenna is an antenna that is further multiplexed for non-NFC use in the electronic device.

3. The NFC apparatus according to claim 1 or 2, wherein a phase of the first emission signal and a phase of the second emission signal are configured such that emission field strengths of the first antenna and the second antenna are superimposed to reach a predetermined strength.

4. The NFC apparatus according to claim 3, wherein
the phase of the first emission signal is opposite to the phase of the second emission signal; or
the phase of the first emission signal is same as the phase of the second emission signal; or
a phase difference between the phase of the first emission signal and the phase of the second emission signal is equal to a preset value.

5. The NFC apparatus according to any one of claims 1-4, wherein a phase shift of the first excitation signal with respect to the first emission signal is equal or unequal to a phase shift of the second excitation signal with respect to the second emission signal.

6. The NFC apparatus according to any one of claims 1-5, wherein within an operating frequency range of the NFC apparatus, with frequency increase, a first intersection point, a second intersection point, and a third intersection point are sequentially formed between a curve of the circular chart corresponding to the impedance of the first antenna and the first impedance matching circuit and/or a curve of the circular chart corresponding to the impedance of the second antenna and the second impedance matching circuit and a real axis of the circular chart with frequency increase, wherein an impedance corresponding to the first intersection point is equal to an impedance corresponding to the third intersection point, and a frequency corresponding to the second intersection point is an operating frequency of the NFC apparatus.

7. The NFC apparatus according to claim 6, wherein the operating frequency is 13.56 MHz, the operating frequency range is [F1, F2], the F1 is smaller than a frequency corresponding to the first intersection point, and the F2 is larger than a frequency corresponding to the third intersection point.

8. The NFC apparatus according to any one of claims 1-7, wherein the first impedance matching circuit is configured to adjust the impedance of the first antenna and the first impedance matching circuit to a first target impedance, the second impedance matching circuit is configured to adjust the impedance of the second antenna and the second impedance matching circuit to a second target impedance, and the first target impedance is equal to the second target impedance.

9. The NFC apparatus according to any one of claims 1-8, wherein the first impedance matching circuit comprises a first filter unit and a first matching unit, and the second impedance matching circuit comprises a second filter unit and a second matching unit,
the first filter unit is connected to the first emission terminal and is configured to filter the first emission signal to obtain a first filtered signal;
the first matching unit is connected to the first filter unit, and is configured to adjust the impedance of the first antenna and the first impedance matching circuit, receive the first filtered signal, and output the first excitation signal to the first antenna;
the second filter unit is connected to the second emission terminal, and is configured to filter the second emission signal to obtain a second filtered signal; and
the second matching unit is connected to the second filter unit, and is configured to adjust the impedance of the second antenna and the second impedance matching circuit, receive the second filtered signal, and output second excitation signal to the second antenna.

10. The NFC apparatus according to claim 9, wherein
the first impedance matching circuit further comprises a first isolation unit connected between the first matching unit and the first antenna and configured to reduce interference between the NFC apparatus and other communication apparatuses multiplexing the first antenna; and
the second impedance matching circuit further comprises a second isolation unit connected between the second matching unit and the second antenna and configured to reduce interference between the NFC apparatus and the other communication apparatuses multiplexing the second antenna.

11. The NFC apparatus according to claim 10, wherein
the first isolation unit comprises an inductor, a capacitor, or a combination of an inductor and a capacitor; and/or
the second isolation unit comprises an inductor, a capacitor, or a combination of an inductor and a capacitor.

12. The NFC apparatus according to any one of claims 9-11, wherein
the first impedance matching circuit further comprises a first resistor connected between the first matching unit and the first antenna and configured to attenuate a Q value of the first antenna; and
the second impedance matching circuit further comprises a second resistor connected between the second matching unit and the second antenna and configured to attenuate a Q value of the second antenna.

13. The NFC apparatus according to any one of claims 8-12, wherein
the first filter unit comprises a first filter inductor and a first filter capacitor, one terminal of the first filter inductor is connected to the first emission terminal, the other terminal of the first filter inductor is connected to one terminal of the first filter capacitor, and the other terminal of the first filter capacitor is grounded; and
the second filter unit comprises a second filter inductor and a second filter capacitor, one terminal of the second filter inductor is connected to the second emission terminal, the other terminal of the second filter inductor is connected to one terminal of the second filter capacitor, and the other terminal of the second filter capacitor is grounded.

14. The NFC apparatus according to claim 13, wherein an inductance value of the first filter inductor is equal to an inductance value of the second filter inductor.

15. The NFC apparatus according to any one of claims 9-14, wherein
the first matching unit comprises a first capacitor and a second capacitor, one terminal of the first capacitor is connected to the first filter unit, the other terminal of the first capacitor is connected to one terminal of the second capacitor, and the other terminal of the second capacitor is grounded; and
the second matching unit comprises a third capacitor and a fourth capacitor, one terminal of the third capacitor is connected to the second filter unit, the other terminal of the third capacitor is connected to one terminal of the fourth capacitor, and the other terminal of the fourth capacitor is grounded.

16. The NFC apparatus according to any one of claims 9-15, wherein the NFC chip further comprises a first receiving terminal and a second receiving terminal, the NFC apparatus further comprises a first peripheral receiving circuit and a second peripheral receiving circuit,
the first peripheral receiving circuit is connected between the first receiving terminal and the first matching unit, the first receiving terminal receives a signal from the first antenna through the first peripheral receiving circuit;
the second peripheral receiving circuit is connected between the second receiving terminal and the second matching unit, and the second receiving terminal receives a signal from the second antenna through the second peripheral receiving circuit.

17. An electronic device, comprising the near field communication (NFC) apparatus according to any one of claims 1-16.
